# DEMANDE DE BREVET EUROPEEN

(11) **EP 3 269 788 A1**
(43) Date de publication de la demande: **17.01.2018**
(21) Numéro de dépôt: 17178761.7
(22) Date de dépôt: 29.06.2017
(51) Int. Cl.: C09J 7/04

(54) **ÉLÉMENT ADHÉSIF À DOUBLE ENCOLLAGE**

(30) Priorité: 13.07.2016 FR 1656790
(71) Demandeur: ADHEX TECHNOLOGIES, 21300 Chenôve (FR)
(72) Inventeur: DURAND, Hervé, 21000 Dijon (FR)
(74) Mandataire: Gevers SA

(57) **Abrégé**

La présente invention concerne un élément adhésif comportant au moins un support (1) souple comprenant une face supérieure et une face inférieure, et une couche d'adhésif sensible à la pression déposée sur la face inférieure dudit support, remarquable en ce qu'il comporte une première couche (2) d'un adhésif sensible à la pression déposée sur tout ou partie de la face inférieure du support (1), l'adhésif sensible à la pression de la première couche (2) présentant une résistance au pelage supérieure ou égale à 2,6 N/cm selon la méthode de test ASTM D3330 de la norme AAMA 711 à une température comprise entre -30 et 23 °C, et une seconde couche (3) d'un second adhésif sensible à la pression déposée sur ladite première couche (2) sur tout ou partie de la face inférieure du support (1), le second adhésif sensible à la pression de la seconde couche (3) étant différent du premier adhésif et présentant une résistance au pelage supérieure ou égale à 2,6 N/cm selon la méthode de test ASTM D3330 de la norme AAMA 711 à une température comprise entre 0 et 70 °C.

## Description

La présente invention se rapporte à un élément adhésif à double encollage et plus particulièrement à une membrane adhésive barrière contre l'air et l'humidité et perméable à la vapeur d'eau, destinée à des surfaces de bâtiments.

Dans le domaine de la construction de bâtiments, il est bien connu d'utiliser des membranes adhésives barrière contre l'air et l'humidité et perméable à la vapeur d'eau, lesdites membranes étant interposées entres les couches de la paroi structurelle du bâtiment afin d'éviter les problèmes dus à l'accumulation de l'humidité.

Ces membranes comprennent généralement une membrane perméable à la vapeur d'eau revêtue d'un côté par un adhésif. Ces membranes forment également des barrières contre l'air et l'humidité, la structure microporeuse des membranes permettant le passage de vapeur d'eau tout en empêchant le passage de l'air. En effet, la structure moléculaire de la vapeur d'eau permet de passer à travers des pores plus petits que l'oxygène et l'azote notamment.

Lesdites membranes sont fixées sur les parois du bâtiment au moyen de la couche d'adhésif, usuellement un adhésif sensible à la pression avec un chevauchement de deux membranes adjacentes pour assurer l'étanchéité.

De telles membranes sont notamment commercialisées par la société 3M sous les références 3015 VP ou 3015 AVB ou par la société SOPREMA sous la marque déposée « Sopraseal Stick VP^{®} » ou bien encore décrites dans les documents US 5,895,301 et US 6,901,712.

Le document US 5,895,301 décrit un stratifié barrière déchirable à la main destiné à obturer un interstice ou un joint dans une construction comprenant un mat de renfort ayant une première résistance à la traction, une bande cellulosique flexible unie au mat de renfort, pouvant être pénétrée par les liquides dans son état non traité, et ayant une deuxième résistance à la traction qui est inférieure à la première résistance à la traction, une résine polymérique résistant à l'eau appliquée sur la bande pour la rendre résistante à l'eau liquide tout en permettant à la vapeur d'eau de la traverser. Le mat de renfort contient des fibres de polyester, de rayonne, de verre ou une combinaison de ces fibres et la résine polymérique s'infiltre dans la bande pour réduire la dimension des pores de celle-ci pour empêcher pratiquement le passage de l'eau liquide.

Ce type de membrane présente l'inconvénient d'être onéreux à produire et de ne pas procurer une parfaite étanchéité à l'air latéralement. Par ailleurs, cette membrane ne présente pas un bon encollage en fonction des conditions climatiques lors de la pose de la membrane, notamment lorsque la température est négative lors de la pose.

Le document US 6,901,712 décrit quant à lui une membrane adhésive barrière contre l'air et l'humidité et perméable à la vapeur d'eau destinée à des surfaces structurales de bâtiments et qui laisse passer la vapeur d'eau. Ladite membrane est constituée d'une feuille perméable à la vapeur d'eau, sur une surface de laquelle est appliqué un film adhésif discontinu.

Bien que ce type de membrane présente l'avantage de procurer une bonne étanchéité à l'air latéralement, il présente néanmoins l'inconvénient d'être onéreux à produire et de ne pas présenter un bon encollage en fonction des conditions climatiques lors de la pose de la membrane.

En effet, afin de permettre un encollage de ces membranes à basses températures, c'est-à-dire à des températures inférieurs à -15°C, il est nécessaire d'appliquer préalablement sur le support, à savoir les parois du bâtiment, une couche dite primaire commercialisée par la société SOPREMA sous la dénomination « Elastocol Stick » ou sous la dénomination « Sopraseal^{®} » par exemple. Ce traitement préalable, bien qu'améliorant la résistance au pelage à basses températures, présente l'inconvénient de ne pas procurer une résistance au pelage totalement suffisante entre -30°C et 70°C et de grever le coût de pose de ces membranes.

Il convient de noter que ce problème d'encollage en fonction des conditions climatiques est inhérent à d'autres éléments adhésifs comprenant un support, perméable à la vapeur d'eau ou non, et une couche d'un adhésif sensible à la pression, tels que des bandes adhésives, des rubans adhésifs, des films adhésifs, ou similaires.

L'un des buts de l'invention est donc de remédier à ces inconvénients en proposant une membrane adhésive barrière contre l'air et l'humidité et perméable à la vapeur d'eau, destinée à des surfaces de bâtiments, de conception simple et peu onéreuse, procurant une bonne adhérence sur les parois du bâtiment quelles que soient la température extérieure lors de la pose et une bonne étanchéité à l'air latéralement.

A cet effet et conformément à l'invention, il est proposé un élément adhésif comportant au moins un support souple comprenant une face supérieure et une face inférieure, et une couche d'adhésif sensible à la pression déposée sur la face inférieure dudit support ; ledit élément adhésif est remarquable ce qu'il comporte une première couche d'un adhésif sensible à la pression déposée sur tout ou partie de la face inférieure du support, l'adhésif sensible à la pression de la première couche présentant une résistance au pelage supérieure ou égale à 2,6 N/cm selon la méthode de test ASTM D3330 de la norme AAMA 711 à une température comprise entre -30 et 23 °C, et une seconde couche d'un second adhésif sensible à la pression déposée sur ladite première couche sur tout ou partie de la face inférieure du film, le second adhésif sensible à la pression de la seconde couche étant différent du premier adhésif et présentant une résistance au pelage supérieure ou égale à 2,6 N/cm selon la méthode de test ASTM D3330 de la norme AAMA 711 à une température comprise entre 0 et 70 °C.

De préférence, la première couche d'adhésif sensible à la pression est déposée sur la totalité de la face inférieure du support sur une épaisseur inférieure ou égale à 50 µm.

Selon une variante d'exécution de l'invention, la première et/ou la seconde couche d'adhésif sensible à la pression est déposée sous forme de bandes horizontales et/ou verticales et/ou diagonales.

Selon une autre variante d'exécution de l'invention, la seconde couche d'adhésif sensible à la pression est déposée sous forme de cordons horizontaux et/ou verticaux et/ou diagonaux.

De préférence, la première et la seconde couche d'adhésif sensible à la pression sont déposées sous forme de cordons diagonaux pour former des croisillons entrelacés.

Pour une application à une membrane adhésive barrière contre l'air et l'humidité et perméable à la vapeur d'eau, destinée à des surfaces de bâtiments, ledit support consiste en un film perméable à la vapeur d'eau.

De plus, ledit film comporte au moins un film microporeux ou un composite de celui-ci et/ou au moins un film polymère orienté ou un composite de celui-ci et/ou au moins un film de polyoléfine ou un composite de celui-ci et/ou au moins un film de polypropylène ou un composite de celui-ci et/ou au moins un film en polyoléfine non tissée ou un composite de celui-ci.

Accessoirement, l'élément adhésif comporte un film protecteur coiffant la seconde couche d'adhésif sensible à la pression.

Une des applications de l'élément adhésif suivant l'invention consiste en une membrane adhésive barrière contre l'air et l'humidité et perméable à la vapeur d'eau, destinée à des surfaces de bâtiments.

D'autres avantages et caractéristiques ressortiront mieux de la description qui va suivre, de plusieurs variantes d'exécution, données à titre d'exemples non limitatifs, d'un élément adhésif suivant l'invention, à partir des dessins annexés sur lesquels :
- la figure 1 est une vue en perspective d'une membrane adhésive barrière contre l'air et l'humidité et perméable à la vapeur d'eau conforme à l'invention,
- la figure 2 est une vue en élévation d'une membrane adhésive barrière contre l'air et l'humidité et perméable à la vapeur d'eau conforme à l'invention,
- la figure 3 est une vue de dessous d'une membrane adhésive barrière contre l'air et l'humidité et perméable à la vapeur d'eau conforme à l'invention.

On décrira ci-après une membrane adhésive barrière contre l'air et l'humidité et perméable à la vapeur d'eau, destinée à des surfaces de bâtiments; toutefois, il est bien évident que l'invention pourra s'appliquer à tout autre élément adhésif comprenant un support, perméable à la vapeur d'eau ou non, et une couche d'un adhésif sensible à la pression, tel que des bandes adhésives, des rubans adhésifs, des films adhésifs, ou similaires.

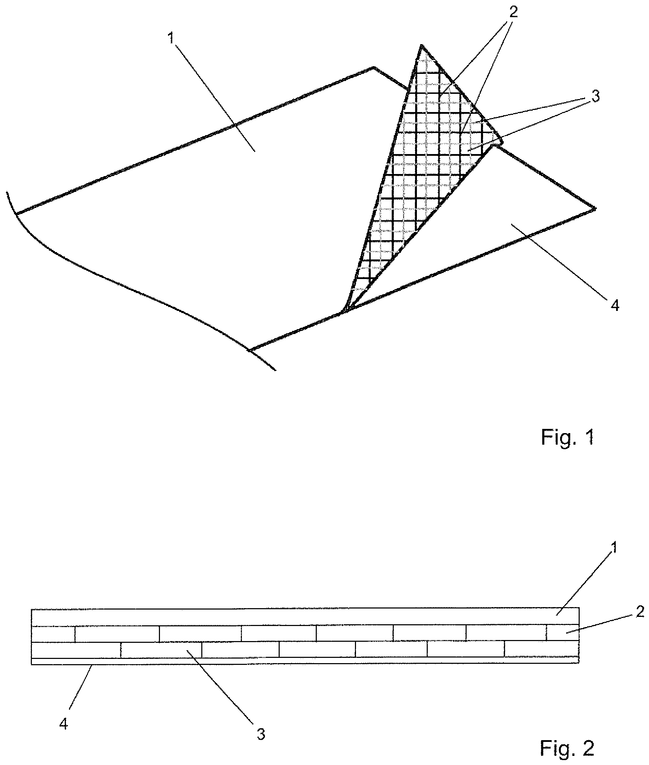

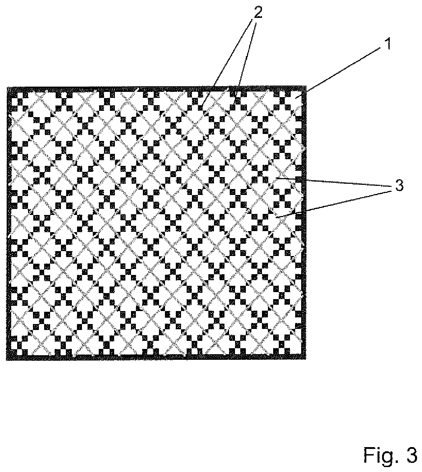

En référence aux figures 1 à 3, la membrane adhésive barrière contre l'air et l'humidité et perméable à la vapeur d'eau, destinée à des surfaces de bâtiments, suivant l'invention, est constituée d'un film perméable à la vapeur d'eau 1, formant le support de l'élément adhésif suivant l'invention, d'une première couche 2 d'un adhésif sensible à la pression déposée sur la face inférieure du film 1 sous la forme de cordons diagonaux formant des croisillons, représentés en traits noirs sur les figures 1 et 3, et d'une seconde couche 3 d'un adhésif sensible à la pression déposée sous forme de cordons diagonaux formant des second croisillons, représentés en traits gris sur les figures 1 et 3, sur la face inférieure du film et sur ladite première couche 2. Les cordons de la première couche 2 et de la seconde couche 3 présentent une épaisseur comprise entre 50 µm et 2 mm. Par ailleurs, la première couche 2 est obtenue dans un adhésif sensible à la pression présentant une résistance au pelage supérieure ou égale à 2,6 N/cm selon la méthode de test ASTM D3330 de la norme AAMA 711 à une température comprise entre -30 et 23 °C permettant de procurer une bonne adhérence à basse température, i.e. à des températures correspondant à des conditions hivernales et la seconde couche 3 est obtenue dans un adhésif sensible à la pression présentant une résistance au pelage supérieure ou égale à 2,6 N/cm selon la méthode de test ASTM D3330 de la norme AAMA 711 à une température comprise entre 0 et 70 °C. On notera que les tests ASTM D3330 sont réalisés sur des supports en Aluminium et/ou en Polyéthylène et/ou en contreplaqué.

Ledit film 1 peut consister dans tout film barrière bien connu de l'homme du métier et peut comporter, par exemple, au moins un film microporeux ou un composite de celui-ci et/ou au moins un film polymère orienté ou un composite de celui-ci et/ou au moins un film de polyoléfine ou un composite de celui-ci et/ou au moins un film de polypropylène ou un composite de celui-ci et/ou au moins un film en polyoléfine non tissée ou un composite de celui-ci.

Par ailleurs, ladite première couche 2 d'adhésif sensible à la pression est obtenue dans une colle thermofusible telle que la colle commercialisée par la société Collano^{®} sous la référence L3 752, par exemple, et ladite seconde couche 3 d'adhésif sensible à la pression est également obtenue dans une colle thermofusible telle que la colle commercialisée par la société Bostik sous la référence sous la référence TLH 2299E.

Toutefois, il est bien évident que l'adhésif sensible à la pression des première 2 et seconde 3 couches pourra consister dans tout adhésif sensible à la pression bien connu de l'homme du métier. De tels adhésifs pourront consister, par exemple, dans des adhésifs acrylates sans pour autant sortir du cadre de l'invention.

Selon une variante d'exécution, non représentée sur les figures, la première couche 2 d'adhésif sensible à la pression est déposée sur la totalité de la face inférieure du film 1 sur une épaisseur de préférence inférieure à 50 µm et la seconde couche 3 d'adhésif sensible à la pression est déposée sous forme de cordons diagonaux pour former des croisillons. On observera que la faible épaisseur de la première couche 2 d'adhésif sensible à la pression ne procure qu'une faible diminution de la perméabilité du film 1 qui ne nuit pas à la performance de la membrane.

Selon une variante d'exécution, la première et/ou la seconde couche d'adhésif sensible à la pression pourront être déposées sous forme de bandes horizontales et/ou verticales et/ou diagonales ou bien encore sous forme de cordons horizontaux et/ou verticaux et/ou diagonaux, lesdites bandes et/ou lesdits cordons pouvant être rectilignes ou sinueux, pour former des motifs réguliers ou irréguliers, sans pour autant sortir du cadre de l'invention.

Accessoirement, en référence aux figures 1 et 2, la membrane suivant l'invention comporte un film protecteur 4 coiffant la seconde couche 3 d'adhésif sensible à la pression. Ledit film protecteur 4 consiste dans tout film protecteur bien connu de l'homme du métier tel qu'un film comportant une surface siliconée par exemple.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Élément adhésif comportant au moins un support (1) souple comprenant une face supérieure et une face inférieure, et une couche d'adhésif sensible à la pression déposée sur la face inférieure dudit support *(1),* ***caractérisé* en ce qu'**il comporte une première couche (2) d'un adhésif sensible à la pression déposée sur tout ou partie de la face inférieure du support (1), l'adhésif sensible à la pression de la première couche (2) présentant une résistance au pelage supérieure ou égale à 2,6 N/cm selon la méthode de test ASTM D3330 de la norme AAMA 711 à une température comprise entre -30 et 23 °C, et une seconde couche (3) d'un second adhésif sensible à la pression déposée sur ladite première couche (2) sur tout ou partie de la face inférieure du support (1), le second adhésif sensible à la pression de la seconde couche (3) étant différent du premier adhésif et présentant une résistance au pelage supérieure ou égale à 2,6 N/cm selon la méthode de test ASTM D3330 de la norme AAMA 711 à une température comprise entre 0 et 70 °C.

2. Élément adhésif suivant la revendication 1 ***caractérisé* en ce que** la première couche (2) d'adhésif sensible à la pression est déposée sur la totalité de la face inférieure du support (1) sur une épaisseur inférieure ou égale à 50 µm.

3. Élément adhésif suivant l'une quelconque des revendications 1 ou 2 ***caractérisé* en ce que** la première (2) et/ou la seconde (3) couche d'adhésif sensible à la pression est déposée sous forme de bandes horizontales et/ou verticales et/ou diagonales.

4. Élément adhésif suivant l'une quelconque des revendications 1 à 3 ***caractérisé* en ce que** la seconde couche (3) d'adhésif sensible à la pression est déposée sous forme de cordons horizontaux et/ou verticaux et/ou diagonaux.

5. Élément adhésif suivant la revendication 4 ***caractérisé* en ce que** la première (2) et la seconde (3) couche d'adhésif sensible à la pression sont déposées sous forme de cordons diagonaux pour former des croisillons entrelacés.

6. Élément adhésif suivant l'une quelconque des revendications 1 à 5 ***caractérisé* en ce que** le support (1) consiste en un film (1) perméable à la vapeur d'eau.

7. Élément adhésif suivant la revendication 6 ***caractérisé* en ce que** ledit film (1) comporte au moins un film microporeux ou un composite de celui-ci.

8. Élément adhésif suivant l'une quelconque des revendications 6 ou 7 ***caractérisé* en ce que** le film (1) comporte au moins un film polymère orienté ou un composite de celui-ci.

9. Élément adhésif suivant l'une quelconque des revendications 6 à 8 ***caractérisé* en ce que** le film (1) comporte au moins un film de polyoléfine ou un composite de celui-ci.

10. Élément adhésif suivant l'une quelconque des revendications 6 à 9 ***caractérisé* en ce que** le film (1) comporte au moins un film de polypropylène ou un composite de celui-ci.

11. Élément adhésif suivant l'une quelconque des revendications 6 à 10 ***caractérisé* en ce que** le film (1) comporte au moins un film en polyoléfine non tissée ou un composite de celui-ci.

12. Élément adhésif suivant l'une quelconque des revendications 1 à 11 ***caractérisé* en ce qu'**il comporte un film protecteur (4) coiffant la seconde couche (3) d'adhésif sensible à la pression.

13. Application de l'élément adhésif suivant l'une quelconque des revendications 6 à 12 à une membrane adhésive barrière contre l'air et l'humidité et perméable à la vapeur d'eau, destinée à des surfaces de bâtiments.
